# EUROPÄISCHE PATENTSCHRIFT

(11) **EP 3 265 839 B1**
(45) Veröffentlichungstag und Bekanntmachung des Hinweises auf die Patenterteilung: **23.01.2019**
(21) Anmeldenummer: 16715232.1
(22) Anmeldetag: 09.02.2016
(51) Int. Cl.: G01S 3/808, G01S 11/14

(54) **VERFAHREN ZUM ERMITTELN EINES VON MEHRWEGEAUSBREITUNGSEFFEKTEN BEFREITEN VERTRAUENSSCHALL-SIGNALS UND ZUM BESTIMMEN EINER ENTFERNUNG UND/ODER EINER RICHTUNG ZU EINER SCHALLQUELLE SOWIE VORRICHTUNG UND FAHRZEUG**
METHOD FOR CALCULATING A CONFIDENCE ECHO SIGNAL THAT IS EXEMPT FROM MULTIPATH PROPAGATION EFFECTS AND FOR DETERMINING A DISTANCE AND/OR A DIRECTION TO AN ECHO SOURCE AND DEVICE AND VEHICLE
PROCÉDÉ POUR LA DÉTERMINATION D'UN SIGNAL SONORE DE CONFIANCE LIBÉRÉ PAR DES EFFETS DE PROPAGATION MULTIVOIES ET POUR LA DÉTERMINATION D'UN ÉLOIGNEMENT ET/OU D'UNE DIRECTION PAR RAPPORT À UNE SOURCE SONORE AINSI QUE DISPOSITIF ET VÉHICULE

(30) Priorität: 06.03.2015 DE 102015103315
(43) Veröffentlichungstag der Anmeldung: 10.01.2018
(73) Patentinhaber: ATLAS ELEKTRONIK GmbH, 28309 Bremen (DE)
(72) Erfinder: NIKOLOVSKA, Aneta, 28325 Bremen (DE)
(74) Vertreter: thyssenkrupp Intellectual Property GmbH
(86) Internationale Anmeldenummer: PCT/DE2016/100056
(87) Internationale Veröffentlichungsnummer: WO 2016/141918

(56) Entgegenhaltungen:
- US-A- 5 659 520
- US-A- 6 160 758
- US-A1- 2009 059 724

## Beschreibung

Die Erfindung betrifft ein Verfahren zum Ermitteln eines von Mehrwegeausbreitungseffekten befreiten Vertrauensschall-Signals, insbesondere Vertrauens-unterwasserschall-Signals und ein Verfahren zum Bestimmen einer Entfernung und/oder einer Richtung zu einer Schallquelle, wobei das Verfahren ein Verfahren zum Ermitteln eines von Mehrwegeausbreitungseffekten befreiten Vertrauensschall-Signals umfasst, sowie eine Vorrichtung und ein Fahrzeug.

Sich im Meer ausbreitende Unterwasserschallwellen werden insbesondere durch Inhomogenitäten und Mehrwegeausbreitungseffekte im Wasser gestört. Insbesondere kann beispielsweise eine Wasserschallwelle durch einen Anteil, welcher an der Meeresoberfläche (und/oder Meeresboden) rückgestreut wird, überlagert werden. Diese Effekte führen dazu, dass beispielsweise eine Quellenortung mit Richtung und Entfernung fehlerbehaftet ist. Das bedeutet, dass gemessene Unterwasserschallsignale Störungen aufweisen können, welche nicht oder nur schwer (rechentechnisch aufwendig) bereinigbar sind.

Insbesondere beim Vermessen von unter dem Meeresspiegel befindlicher Objekte wie beispielsweise Fundamente von Off-Shore Windenergieanlagen oder versunkene archäologische Stätten bedürfen einer genauen Vermessung, sodass ein realistische Bild des abgescannten Bereichs erhaltbar ist.

Die US 5,659,520 A offenbart ein Navigationssystem zur Echtzeitschätzung der Positionen von mehrfach zusammenwirkenden Zielen, bei welchem ein Phasendifferenzverfahren verwendet wird, um störende Mehrwegsignale von den Vertrauensschall-Signalen zu unterscheiden, wobei im Allgemeinen die Mehrwegsignale eine längere Laufzeit zum aufnehmenden Schallwandler zurücklegen, wodurch störenden Effekte zeitlich nach dem Anliegen der Vertrauensschall-Signale auftreten.

Aufgabe der Erfindung ist es, den Stand der Technik zu verbessern.

Gelöst wird die Aufgabe durch ein Verfahren zum Ermitteln eines von Mehrwegeausbreitungseffekten befreiten Vertrauensschall-Signals V(t), insbesondere Vertrauensunterwasserschall-Signals, mit folgenden Schritten:
- Bestimmen eines zeitabhängigen Messschallsignals M(t), welches eine Überlagerung des Vertrauensschall-Signals V(t) und eines Mehrwegeschall-Signals S(t) aufweist, sodass insbesondere das Messschallsignal M(t) eine Interferenz aufweist,
- Ermitteln einer Umhüllenden U(t) des Messschallsignals M(t),
- Ermitteln einer Periodendauer T der Umhüllenden U(t) und
- Verwenden des Messschallsignals während eines Anfangszeitraums, welche eine Zeitspanne a*T umfasst, wobei a ein Sicherheitsfaktor ist und der Sicherheitsfaktor einen Wert zwischen 0,1 und 0,7, insbesondere zwischen 0,2 und 0,5 oder insbesondere zwischen 0,25 und 0,4, aufweist, und T die ermittelte Periodendauer ist, sodass das von Mehrwegeausbreitungseffekten befreite Vertrauensschall-Signal V(t) für [t=0 bis a*T] gegeben ist.

Somit kann ein Signal gebildet werden, welches von Störungen, welche aufgrund von Mehrwegeausbreitungseffekten entstehen, eliminiert werden können. Anhand dieses Signals kann dann eine Weiterverarbeitung stattfinden, welche beispielsweise eine Richtung (synonym zu Peilung) oder die Entfernung zu einer Schallquelle ermittelt.

### Folgendes Begriffliche sei erläutert:

Ein "Mehrwegeausbreitungseffekt" ist insbesondere eine Störung oder Überlagerung einer Wasserschallwelle, welche aufgrund der Wasserschallquelle selbst erfolgt. Dies findet insbesondere dadurch statt, dass eine Überlagerung durch die (Unter)Wasserschallwelle selbst von einem reflektierten Teil dieser Unterwasserschallwelle erfolgt. So kann ein an der Wasseroberfläche zurückgestrahlter Anteil der Wasserschallwelle mit dem direkt ausgesandten Teil der Wasserschallwelle interferieren.

Ein "Vertrauensschall-Signal V(t)" ist insbesondere ein Messsignal oder ein aufbereitetes Signal, welches quasi "überlagerungsfrei" oder "interferenzfrei" ist. Mithin handelt es sich um ein, zumindest bezüglich der Mehrwegeausbreitungseffekte, bereinigtes Signal, welches für die weitere Verarbeitung zur Verfügung steht.

Unter "Bestimmen eines zeitabhängigen Messschallsignals M(t)" wird insbesondere das Umwandeln einer Druckänderung mittels Unterwasserschallwandler in ein elektrisches Signal verstanden. Das elektrische Signal kann dabei aufbereitet und somit signalkonditioniert sein. Als Schallwandler können insbesondere Hydrophone wie beispielsweise Piezo-Keramiken eingesetzt werden. Das Messschallsignal weist insbesondere eine Amplitude auf, welche sich mit der Zeit ändert.

Das "Vertrauensschall-Signal V(t)" ist insbesondere der Teil des (Messschall-)Signals, bei dem davon ausgegangen werden kann, dass keine oder nur geringe Einwirkungen aufgrund von Mehrwegeausbreitungseffekten vorliegen.

Ein Kerngedanke der Erfindung liegt dabei darin, dass ein störendes Mehrwegesignal im Allgemeinen eine längere Laufzeit zum aufnehmenden Schallwandler zurücklegt, sodass diese Effekte zeitlich nach dem Anliegen des Vertrauensschall-Signals auftreffen. Insbesondere aufgrund der Periodizität der Einhüllenden kann eine Zeitangabe ermittelt werden, bei der ausgeschlossen werden kann, dass bereits Mehrwegeausbreitungseffekte vorliegen.

Ein "Mehrwegeschallsignal S(t)" ist insbesondere ein Schallsignal, welches nicht direkt von einer Schallquelle zu dem Schallwandler gesandt wird, sondern welches beispielsweise an Wasserschichten oder an der Meeresoberfläche reflektiert wird und mithin zu gewissen Interferenzen beziehungsweise Schwebungseffekten führt.

Die "Umhüllende U(t)" wird auch Einhüllende genannt und ist streng genommen mathematisch eine Kurve, welche jede Kurve (gemessene Schallfrequenz) einer Kurvenschar (aufgenommene (Gesamt)Messschallsignale) in einem Punkt berührt. Aufgrund der Interferenz ergeben sich bei den jeweiligen Maximalamplituden nebeneinanderliegender Schwingungen des Messschallsignals jeweils eine leichte Erhöhung oder Erniedrigung, sodass sich ein periodisches Muster ausbildet. Der approximierte Verlauf dieses Musters wird vorliegend Umhüllende genannt und wird mathematisch durch die Funktion U(t) beschrieben. Dieser Umhüllenden U(t) kann eine "Periodendauer T" zugeordnet werden. Diese Periodendauer T kann dabei eine Konstante oder auch ein gemittelter Wert sein. Kern des Erfindungsgedanken dabei ist, dass in dem Intervall zwischen t=0 und t=T sich keine oder nur geringe Einflüsse des Mehrwegeschall-Signals S(t) ergeben.

Ein sich daraus ergebender "Anfangszeitraum" ist mithin ein Vertrauenszeitraum, anhand welchem das Messsignal ungestört oder nur gering gestört ist.

Um ganz sicher zu sein, dass das Messsignal unbeeinflusst von sämtlichen Störungen durch das Mehrwegeschall-Signal S(t) ist, wird ein "Sicherheitsfaktor" eingeführt, welcher einen Wert <=1 ausbildet. Somit umfasst der Maximalzeitraum des Anfangszeitraum den Zeitwert T, welcher der "ermittelten Periodendauer" entspricht. Der Start des Anfangszeitraums und somit die Definition für t=0, wird insbesondere dabei anhand einer Schwelle-Amplitude festgesetzt, welche beispielsweise ab 5 % eines Maximalsignals des Messschallsignals einsetzt.

Der Sicherheitsfaktor weist einen Wert zwischen 0,1 und 0,7, insbesondere zwischen 0,2 und 0,5 oder insbesondere zwischen 0,25 und 0,4 auf. Insbesondere für Werte um ungefähr 0,3 hat sich gezeigt, dass es praktisch keine Mehrwegeausbreitungseffekte gibt, sodass dieses Signal als Vertrauensschall-Signal V(t) gewertet werden kann.

Um möglichst zeitnah und einfach die Periodendauer der Umhüllenden U(t) ermitteln zu können, kann diese mittels eines mathematischen Anpassens ermittelt werden. Ein mathematisches Anpassen wird allgemein auch als Fitten bezeichnet. Fitten oder mathematisches Anpassen wird auch unter dem Oberbegriff der Ausgleichsrechnung geführt und bezeichnet eine mathematische Optimierungsmethode, um eine Reihe von Messdaten, die unbekannten Parameter eines geometrischphysikalischen Modells oder die Parameter einer vorgegebenen Funktion zu bestimmen (zu schätzen). Insbesondere kann vorliegend bei der Umhüllenden angenommen werden, dass es sich um eine periodische Funktion wie beispielsweise Sinusfunktion handelt. Anhand dieser angepassten Sinusfunktion lässt sich die Periodendauer T bestimmen.

In einer weiteren Ausführungsform erfolgt das Bestimmen des zeitabhängigen Messschallsignals M(t) mittels eines Hydrophons.

Ein Hydrophon ist dabei insbesondere ein Schallwandler, welcher Druckunterschiede am Hydrophon in elektrische Signale umwandelt. Derartige Hydrophone können beispielsweise mit Piezo-Keramiken gebildet sein.

Um die Entfernung und Richtung (synonym zu Peilung zu verstehen) zu ermitteln, kann das Bestimmen des zeitabhängigen Messsignals mittels weiterer Hydrophone erfolgen, wobei sämtliche Hydrophone insbesondere eine Sonarantenne bilden. Derartige Sonarantennen können beispielsweise als Linearantennen ausgebildet sein oder entsprechend in ein der Linearantenne entsprechendes Signal transformiert werden oder mathematisch beziehungsweise rechentechnisch derart transformiert werden, dass Signale einer Linearantenne vorliegen.

In einem weiteren Aspekt der Erfindung wird die Aufgabe gelöst durch ein Verfahren zum Bestimmen einer Entfernung und/oder einer Richtung zu einer Schallquelle, wobei das Verfahren ein Verfahren zum Ermitteln eines von Mehrwegeausbreitungseffekten befreiten Vertrauensschall-Signals V(t) nach einem der vorherigen Ansprüche aufweist, wobei das Verfahren folgende Zusatzschritte aufweist:
- Ermitteln einer Schallquellenrichtung mittels des von Mehrwegeausbreitungseffekten befreiten Vertrauensschall-Signals V(t),
- sukzessives mathematisches Krümmen der Sonarantenne mittels des von Mehrwegeausbreitungseffekten befreiten Vertrauensschall-Signals V(t) in der ermittelten Schallquellenrichtung,
- Ermitteln eines Signalmaximums und des zugehörigen Krümmungsradius und
- Entfernungsbestimmen anhand des ermittelten Krümmungsradius.

Somit kann insbesondere ein Unterwasservermessen eines Objektes erfolgen. Zudem kann beispielsweise für eine Wartung an einem Fundament einer Windkraftanlage oder eines Bohrturms oder bei der Wracksuche der direkte Weg zu einem Unterwasserobjekt ermittelt werden. Dies verkürzt die Zeit zum Aufsuchen des Objektes und verlängert beispielsweise bei Tauchern die effektive Arbeitszeit.

### Folgendes Begriffliche sei erläutert:

Die "Entfernung" ist insbesondere ein Abstand der Antenne zu dem georteten Objekt. Insbesondere wird dabei die Mitte der Antenne als Startpunkt herangezogen. Auch andere Punkte können verwendet werden, müssen dann jedoch entsprechend rechentechnisch ermittelt werden.

Die "Richtung" wird auch als Peilung bezeichnet. Eine übliche Angabe ist von dem oben genannten Startpunkt aus einem Winkel, insbesondere bei einer Linearantenne, zu einer Orthogonalen der Linearantenne durch den Startpunkt. Das bedeutet, wenn das Objekt direkt vor einem liegt, beträgt beispielsweise die Peilung 0 .

Das "Ermitteln einer Schallquellenrichtung" erfolgt insbesondere durch ein mathematisches Schwenken einer (virtuellen) Linearantenne um den Startpunkt. Dabei werden die Signale an den Hydrophonen jeweils für einzelne Peilungswinkel aufaddiert oder beispielsweise die Amplituden der Hydrophone jeweils integriert aufaddiert und es kann davon ausgegangen werden, dass das Maximalsignal bei dem Winkel (bei der Peilung) vorliegt, wenn eine Orthogonale zu der Linearantenne direkt auf die Schallquelle zeigt.

Das mathematische Drehen erfolgt dabei insbesondere schrittweise, beispielsweise um jeweils 1 ° gedreht. Drehpunkt vorliegend ist wiederum insbesondere der Startpunkt, für welchen dann später die Entfernung zu einem Schallobjekt bestimmt wird.

Statt der Amplitude kann selbstverständlich auch die Fläche unterhalb des mathematischen Messschallsignals ermittelt werden, welche ebenfalls ein Maß für die Energie sein kann. Auch können weitere abgeleitete Größen der Amplitude oder des Amplitudenverlaufs verwendet werden.

Das "sukzessive mathematische Krümmen" bedeutet, dass im Falle dessen, dass die (virtuelle) Linearantenne auf die Schallquelle ausgerichtet ist (z.B. Peilung 0°), dass die einzelnen Hydrophone der (virtuellen) Linearantenne derart zueinander zeitversetzt werden, dass sie einem Bogensegment entsprechen, welches durch einen Radius beschrieben werden kann. Dieser (Krümmungs) Radius entspricht dann der Entfernung zum Schallobjekt. Bei dem sukzessiven mathematischen Krümmen wird wiederum insbesondere das für jede einzelne Krümmung vorliegende summierte Amplitudensignal ermittelt, wobei wiederum das Maximalsignal, die korrekte Krümmung, mithin eine hervorragende Abschätzung für die Entfernung (Krümmungsradius) darstellt.

In einem weiteren Aspekt wird die Aufgabe gelöst durch eine Vorrichtung, welche derart eingerichtet ist, dass eine der zuvor beschriebenen Verfahren durchgeführt werden kann. Insbesondere umfasst eine derartige Vorrichtung ein Sonar. Dabei sind sowohl Sonare mit Linearantennen als auch mit anderen Basen, wie beispielsweise Zylinderbasen, möglich. Bei den Sonaren können sowohl Schleppsonare als auch Seitensichtsonare oder dergleichen eingesetzt werden. Die eigentliche Umsetzung kann dann rechentechnisch, beispielsweise durch FPGA oder durch einen Softwarecode realisiert werden, welche durch einen Rechner entsprechend umgesetzt wird.

In einem weiteren Aspekt wird die Aufgabe gelöst durch ein Fahrzeug, insbesondere Wasserfahrzeug, welches die zuvor beschriebene Vorrichtung aufweist. Selbstverständlich können hier auch Hubschrauber oder dergleichen vorgesehen sein, sofern diese beispielsweise über eine Sonarantenne verfügen.

Im Weiteren wird die Erfindung anhand eines Ausführungsbeispiels näher erläutert. Es zeigen
- Figur 1: eine schematische Darstellung eines Mehrwegeausbreitungseffektes und
- Figur 2: eine stark schematische Darstellung eines an einem einzelnen Hydrophon anliegendes Zeitsignals und die zugehörige mathematische Umhüllende.

Ein Objekt 101 sei vorliegend ein AUV (Autonomous Underwater Vehicle), welches mit der Flank-Array Sonarantenne 103 überwacht werden soll. Die Flank-Array Sonarantenne verfügt über mehrere Hydrophone.

Der Propeller des AUVs 101 strahlt dabei Unterwasserschallsignale als direkte Schallwellen 105 aus. Diese Schallwellen 105 werden insbesondere an der Wasseroberfläche 109 reflektiert, sodass an der Wasseroberfläche reflektierte Unterwasserschallwellen 107 die direkten Schallwelle 105 überlagern. Die Überlagerung der Wellen wird dann von der Flank-Array Sonarantenne 103 und den zugehörigen Hydrophonen elektronisch gemessen und aufbereitet.

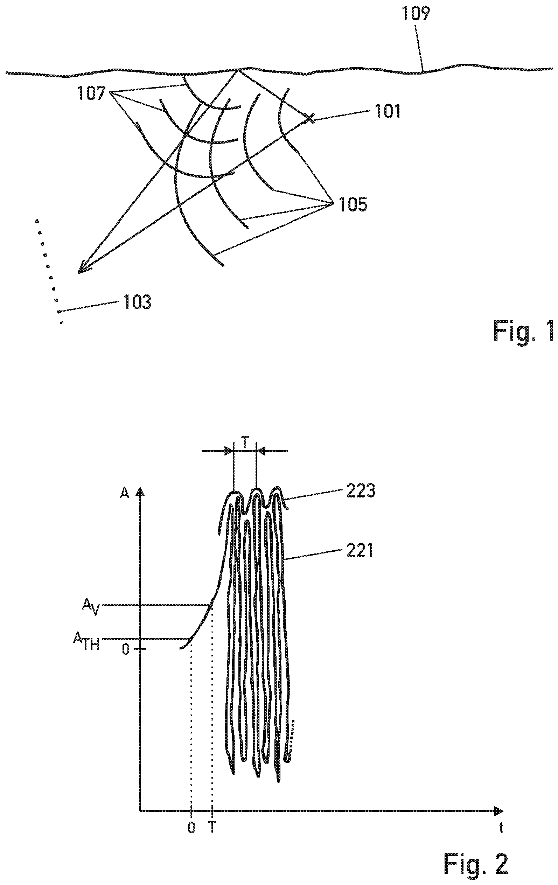

Aufgrund der Überlagerung der direkten unterwasserschallwellen 105 und der an der Wasseroberfläche reflektierten Schallwellen 107 findet eine Überlagerung (Interferenz) der Signale statt, welche beispielsweise durch ein Einzelhydrophon der Flank-Array Sonarantenne 103 gemessen wird. Ein derartiges Einzelhydrophonsignal ist insbesondere in Figur 2 dargestellt.

Durch die Interferenz bildet sich an den Amplitudenmaxima und -minima jeweils eine periodische Struktur aus. Diese periodische Struktur wird mittels einer mathematisch angefitteten Einhüllenden 223 angepasst. Es wird vorliegend davon ausgegangen, dass die Anpassfunktion eine harmonische Sinusfunktion ist. Anhand der gefundenen Parameter dieser Sinusfunktion wird die Periodendauer T der angefitteten Einhüllenden 223 bestimmt.

Vorliegend wird davon ausgegangen, dass bis zu einer Periodendauer ein Signal im Wesentlichen unbeeinflusst von den an der Wasseroberfläche reflektierten Schallwellen 107 ist. Der Zeitpunkt t=0 wird dann gesetzt, wenn die gemessene Schwelle-Amplitude A_{TH} bei 3 % des ersten Maximums liegt. Von dort aus wird der Zeitverlauf des Messsignals 221 bis zu einer Vertrauensamplitude A_{V} zum Zeitpunkt t=T verwendet, sodass ein Vertrauensschall-Signal V(t) für das Zeitinterwall t=0 bis t=T vorliegt.

Vorliegend wird zur Vereinfachung jeweils die Vertrauensamplitude A_{V} für sämtliche Hydrophone bestimmt. Anschließend wird die Flank-Array Sonarantenne 103 mathematisch um ihren Mittelpunkt gedreht. Zudem wird für jeden Drehwinkel (Schrittweite 0,1°) die Summe der Vertrauensamplituden A_{V} für alle Hydrophone gebildet. Bei dem Maximalwert, welcher sich für die Summe der ermittelten Vertrauensamplituden A_{V} über alle Hydrophone hinweg ergibt, wird davon ausgegangen, dass die mathematisch gedrehte Flank Array Sonarantenne 103 orthogonal zum AUV 101 ausgerichtet ist.

In dieser Position wird nun die mathematisch gedrehte Flank-Array Sonarantenne 103 mathematisch gekrümmt. Dieses Krümmen wird ebenso wie auch das mathematische Drehen insbesondere dadurch erreicht, dass die einzelnen Signale der Hydrophone zeitversetzt ausgewertet werden. Es erfolgt ein schrittweises (sukzessives) Krümmen. Selbstverständlich kann vorliegend alternativ erst ein kleiner und dann ein großer Krümmungsradius eingestellt werden, um sich einem optimalen Ergebnis schneller anzunähern. Auch dies wird unter sukzessivem mathematischen Krümmen verstanden.

Es wird wiederum jeweils die Summe der sich ergebenden Vertrauensamplituden A_{V} der einzelnen Hydrophone der Flank-Array Sonarantenne 103 ermittelt und davon ausgegangen, dass bei einem Maximalwert die Krümmung der Flank-Array Sonarantenne 103 auf einem Kreisbogen mit einem Krümmungsradius liegt, sodass der Krümmungsradius der Entfernung zum AUV 101 entspricht, da davon ausgegangen wird, dass sich die Unterwasserschallwellen im Wesentlichen kugelförmig ausbreiten.

### Bezugszeichenliste

- 101: Objekt/AUV
- 103: Flank-Array Sonarantenne
- 105: direkte Schallwellen
- 107: an Wasseroberfläche reflektierte Schallwellen
- 109: Wasseroberfläche
- A_{TH}: Schwelle-Amplitude
- A: Amplitude
- A_{V}: Vertrauensamplitude
- T: Periodendauer
- t: Zeit
- 221: Messsignal
- 223: angefittete Einhüllende

## Patentansprüche

1. Verfahren zum Ermitteln eines von Mehrwegeausbreitungseffekten befreiten Vertrauensschall-Signals V(t), insbesondere Vertrauensunterwasserschall-Signals, mit folgenden Schritten:
- Bestimmen eines zeitabhängigen Messschallsignals M(t), welches eine Überlagerung des Vertrauensschall-Signals V(t) und eines Mehrwegeschall-Signals S(t) aufweist, sodass insbesondere das Messschallsignal eine Interferenz aufweist,
- Ermitteln einer Umhüllenden U(t) des Messschallsignals M(t),
- Ermitteln einer Periodendauer T der Umhüllenden U(t) und
- Verwenden des Messschallsignals während eines Anfangszeitraums, welche eine Zeitspanne a*T umfasst, wobei a ein Sicherheitsfaktor ist und der Sicherheitsfaktor einen Wert zwischen 0,1 und 0,7, insbesondere zwischen 0,2 und 0,5 oder insbesondere zwischen 0,25 und 0,4, aufweist, und T die ermittelte Periodendauer ist, sodass das von Mehrwegeausbreitungseffekten befreite Vertrauensschall-Signal V(t) für [t=0 bis a*T] gegeben ist.

2. Verfahren nach einem der vorherigen Ansprüche, **dadurch gekennzeichnet, dass** das Bilden der Umhüllenden U(t) mittels eines mathematischen Anpassens erfolgt.

3. Verfahren nach einem der vorherigen Ansprüche, **dadurch gekennzeichnet, dass** das Bestimmen des zeitabhängigen Messschallsignals M(t) mittels eines Hydrophons erfolgt.

4. Verfahren nach Anspruch 3, **dadurch gekennzeichnet, dass** das Bestimmen des zeitabhängigen Messschallsignals M(t) mittels weiterer Hydrophone erfolgt, wobei sämtliche Hydrophone insbesondere eine Sonarantenne bilden.

5. Verfahren zum Bestimmen einer Entfernung und/oder einer Richtung zu einer Schallquelle, wobei das Verfahren ein Verfahren zum Ermitteln eines von Mehrwegeausbreitungseffekten befreiten Vertrauensschall-Signals V(t) nach einem der vorherigen Ansprüche aufweist, wobei das Verfahren folgende Zusatzschritte aufweist:
- Ermitteln einer Schallquellenrichtung mittels des von Mehrwegeausbreitungseffekten befreiten Vertrauensschall-Signals V(t),
- sukzessives mathematisches Krümmen der Sonarantenne mittels des von Mehrwegeausbreitungseffekten befreiten Vertrauensschall-Signals V(t) in der ermittelten Schallquellenrichtung,
- Ermitteln eines Signalmaximums und des zugehörigen Krümmungsradius und
- Entfernungsbestimmen anhand des ermittelten Krümmungsradius.

6. Vorrichtung, insbesondere Sonar, umfassend Mittel zur Ausführung des Verfahren nach einem der vorherigen Ansprüche.

7. Fahrzeug, insbesondere Wasserfahrzeug, welches eine Vorrichtung nach Anspruch 6 aufweist.

## Claims

1. Method for ascertaining a trusted sound signal V(t), in particular a trusted underwater sound signal, freed from multipath propagation effects, having the following steps:
- determining a time-dependent measurement sound signal M(t) that comprises a superimposition of the trusted sound signal V(t) and of a multipath sound signal S(t), so that in particular the measurement sound signal comprises an interference,
- ascertaining an envelope U(t) of the measurement sound signal M(t),
- ascertaining a period duration T of the envelope U(t) and
- using the measurement sound signal during an initial period of time, which comprises a period a*T, where a is a certainty factor and the certainty factor comprises a value between 0.1 and 0.7, in particular between 0.2 and 0.5 or in particular between 0.25 and 0.4, and T is the ascertained period duration, so that the trusted sound signal V(t) freed from multipath propagation effects is provided for [t = 0 to a*T].

2. Method according to one of the preceding claims, **characterized in that** the envelope U(t) is formed by means of mathematical adaptation.

3. Method according to either of the preceding claims, **characterized in that** the time-dependent measurement sound signal M(t) is determined by means of a hydrophone.

4. Method according to Claim 3, **characterized in that** the time-dependent measurement sound signal M(t) is determined by means of further hydrophones, wherein all of the hydrophones in particular form a sonar antenna.

5. Method for determining a distance and/or a direction to a sound source, wherein the method comprises a method for ascertaining a trusted sound signal V(t) freed from multipath propagation effects according to one of the preceding claims, the method comprising the following additional steps:
- ascertaining a sound source direction by means of the trusted sound signal V(t) freed from multipath propagation effects,
- progressively mathematically bending the sonar antenna in the ascertained sound source direction by means of the trusted sound signal V(t) freed from multipath propagation effects,
- ascertaining a signal maximum and the associated radius of curvature, and
- determining the distance on the basis of the ascertained radius of curvature.

6. Apparatus, in particular sonar, comprising means for carrying out the method according to one of the preceding claims.

7. Vehicle, in particular watercraft, that comprises an apparatus according to Claim 6.

## Revendications

1. Procédé pour la détermination d'un signal sonore de confiance V(t), en particulier d'un signal sonore de confiance sous-marin, dépourvu d'effets de propagation par trajets multiples, comprenant les étapes suivantes :
- déterminer un signal sonore de mesure M(t) dépendant du temps, qui comprend une superposition du signal sonore de confiance V(t) et d'un signal sonore à trajets multiples S(t), de sorte que le signal sonore de mesure comporte en particulier un brouillage,
- déterminer une enveloppe U(t) du signal sonore de mesure M (t),
- déterminer une durée de période T de l'enveloppe U(t) et
- utiliser le signal sonore de mesure pendant une période initiale qui comprend une période de temps a*T, où a est un facteur de sécurité et le facteur de sécurité présente une valeur comprise entre 0,1 et 0,7, en particulier entre 0,2 et 0,5 ou en particulier entre 0,25 et 0,4, et T est la durée de période déterminée, de manière à obtenir le signal sonore de confiance V(t) dépourvu d'effets de propagation par trajets multiples pour [t=0 à a*T].

2. Procédé selon l'une des revendications précédentes, **caractérisé en ce que** le calcul de l'enveloppe U(t) est réalisé par un ajustement mathématique.

3. Procédé selon l'une des revendications précédentes, **caractérisé en ce que** le signal sonore de mesure M(t) dépendant du temps est déterminé au moyen d'un hydrophone.

4. Procédé selon la revendication 3, **caractérisé en ce que** le signal sonore de mesure M (t) dépendant du temps est déterminé au moyen d'hydrophones supplémentaires, dans lequel l'ensemble des hydrophones forme en particulier une antenne sonar.

5. Procédé pour la détermination d'une distance et/ou d'une direction d'une source sonore, dans lequel le procédé comprend un procédé pour la détermination d'un signal sonore de confiance V(t) dépourvu d'effets de propagation par trajets multiples selon l'une des revendications précédentes, dans lequel le procédé comprend les étapes supplémentaires suivantes :
- déterminer une direction de la source sonore au moyen du signal sonore de confiance V(t) dépourvu d'effets de propagation par trajets multiples,
- incurver mathématiquement successivement l'antenne du sonar au moyen du signal sonore de confiance V(t) dépourvu d'effets de propagation par trajets multiples, dans la direction déterminée de la source sonore,
- déterminer un maximum du signal et le rayon de courbure associé, et
- déterminer la distance sur la base du rayon de courbure déterminé.

6. Dispositif, en particulier sonar, comprenant des moyens destinés à la mise en oeuvre du procédé selon l'une des revendications précédentes.

7. Véhicule, en particulier véhicule nautique, qui comporte un dispositif selon la revendication 6.
